## Europäisches Patentamt
## European Patent Office
## Office européen des brevets

(19)

(11) Veröffentlichungsnummer: **0 078 963**
**A2**

(12) # EUROPÄISCHE PATENTANMELDUNG

(21) Anmeldenummer: **82109819.1**

(22) Anmeldetag: **23.10.82**

(51) Int. Cl.³: **B 24 D 3/00**

---

(30) Priorität: **06.11.81 DE 3144077**

(43) Veröffentlichungstag der Anmeldung:
**18.05.83 Patentblatt 83/20**

(84) Benannte Vertragsstaaten:
**AT CH FR IT LI NL**

(71) Anmelder: **Karl M. Reich, Maschinenfabrik GmbH**
**Kisslingstrasse 1 Postfach 1740**
**D-7440 Nürtingen(DE)**

(72) Erfinder: **Dettelbach, Alfred**
**Rosmarinweg 27**
**D-7000 Stuttgart-50(DE)**

(72) Erfinder: **Gresser, Gerhard**
**Zeisslerstrasse 5**
**D-7446 Oberboihingen(DE)**

---

(54) **Verfahren zur Herstellung eines Schleifschuhs.**

(57) Zum Schleifen von profilierten Leisten und Seitenflächen von plattenförmigen Werkstücken wird ein Schleifschuh (8) aus Schaumstoff (17) verwendet, an dem das mit dem Schleifmittel (12) versehene Schleifband (11) befestigt ist. Zur einfachen und billigen Herstellung von Schleifschuh (8) wird ein Profilkörper (9) und das Schleifband (11) in einem Schäumwerkzeug (1) befestigt. Nach dem Ausschäumen ist das Schleifband (11) konturentreu mit dem ausgehärteten Schaumstoff verbunden.

FIG.2

EP 0 078 963 A2

3.11.81
0078963 · 1.49

Karl M. Reich, Maschinenfabrik GmbH, 7440 Nürtingen

---

Verfahren zur Herstellung eines Schleifschuhs

---

Die Erfindung betrifft ein Verfahren zur Herstellung
eines Schleifschuhs mit einer mit dem Schleifmittel
versehenen Profilfläche.

Zum Schleifen von profilierten Leisten und Seitenflächen
von plattenförmigen Werkstücken werden Schleifschuhe
benötigt, die ein Gegenprofil zu dem zu schleifenden
Profil aufweisen, wobei das Gegenprofil mit dem Schleifmittel versehen ist. Es ist nun bekannt, solche Schleifschuhe aus Gummi, Kork oder ähnlichen Werkstoffen herzustellen und dabei das Gegenprofil spanabhebend, z.B.
durch Schleifen zu erzeugen und es anschließend mit der
Schleifleinwand zu versehen.

Die Herstellung solcher Schleifschuhe ist lohnintensiv
und damit teuer, das Profil läßt sich, insbesonders bei
scharfen Kanten und Ecken, nicht einwandfrei.erzeugen,
so daß sich beim Schleifen des Werkstücks eine Veränderung
des Originalprofils ergeben kann.

Der Erfindung liegt daher die Aufgabe zugrunde, ein Verfahren zur Herstellung eines Schleifschuhs zu schaffen,
mit dem der Schleifschuh auf einfache und billige Art
hergestellt werden kann und mit dem ein exakt konturentreues Gegenprofil erzielbar ist.

...

0078963

Diese Aufgabe wird erfindungsgemäß durch die im kennzeichnenden Teil des Anspruchs 1 angegebenen Merkmale gelöst.

Damit ist es auch für den Kleinbetrieb möglich, bei häufig wechselnden Profilen und auch kleinen Stückzahlen die notwendigen Schleifschuhe mit den einfachsten Hilfsmitteln billig und mit genauestem Gegenprofil herzustellen. Der Schleifschuh kann dabei in der einfachsten Form als Handschleifklotz oder, in entsprechender Form ausgeführt, auch bei stationären Maschinen eingesetzt werden.

Wird bei einer vorteilhaften Ausführungsform der Erfindung ein Schleifband mit hoher Querdehnung verwendet, dann läßt sich ein konturentreues Profil erzielen. Querelastische Schleifbänder werden beim Konturenschleifen mit umlaufenden Band verwendet, wobei sie sich dem Profil in einem gewissen Grad elastisch anpassen.

Für die Herstellung von erfindungsgemäßen Schleifschuhen werden jedoch Schleifbänder mit einer solchen Querdehnung verwendet, daß sie sich bei dem gegebenen Innendruck des Schaumstoffes konturentreu auch an die scharfen Ecken und Kanten der Profilfläche anschmiegen. Diese hochflexiblen Bänder können bei dem erfindungsgemäßen Verfahren ohne weiteres eingesetzt werden, weil das Schleifband sich mit dem ausgehärteten Schaum fest verbindet und so seine Form behält.

Bei einer weiteren vorteilhaften Ausführungsform der Erfindung kann der Profilkörper mit Bohrungen versehen sein, die seine Profilfläche mit einem Kanal mit Unterdruck verbinden. Auf diese Weise wird das Schleifband vor Einbringen des Schaumstoffs sicher an der Profilfläche gehalten und kann dann vom Schaumstoff an die Profilfläche angepreßt werden. Zum Festhalten des Schleifbandes an der Profilfläche des Profilkörpers können jedoch auch Klammern, ein Klebeband ein geeigneter Klebstoff verwendet werden.

BAD ORIGINAL

Es ist auch möglich, auf das Schleifband ganz zu verzichten und nach dem Einbringen des Profilkörpers
dessen Profilfläche mit dem Schleifkorn zu bestreuen,
das sich anschließend mit dem Schaumstoff fest verbindet.
Dessen Gegenprofil weist dann eine mit dem Schleifmittel
versehene Schleiffläche auf.

Es ist zweckmäßig, zur Herstellung von Schleifschuhen
zunächst ein etwa 1 m langes Formteil herzustellen, das
dann in die einzelnen Schleifschuhe abgeteilt werden kann.
In diesem Fall ist es zweckmäßig, die Bohrungen für den
Unterdruck im Profilkörper in die Ebene der Trennschnitte
zu legen. Diese Herstellung eines Formteiles und die anschließende Aufteilung ergibt eine Verbilligung der Fertigung, zweckmäßigerweise wird dabei der Innenraum des
Schleifwerkzeugs so gewählt, daß eine oder mehrere handelsübliche Kartuschen für den Kunststoff verwendet werden
können.

Je nach Verwendungszweck läßt sich dabei der Schaumstoff
so auswählen, daß druckelastische bis harte Schleifschuhe
entstehen.

Im folgenden ist ein Ausführungsbeispiel der Erfindung
unter Bezugnahme auf die Zeichnungen näher beschrieben.

Es zeigen:

Fig. 1    Querschnitt durch ein Schäumwerkzeug
          mit Profilkörper

Fig. 2    Querschnitt durch ein Schäumwerkzeug
          mit ausgeschäumtem Schleifschuh

Fig. 3    Querschnitt durch den fertigen Schleifschuh.

...

0078963

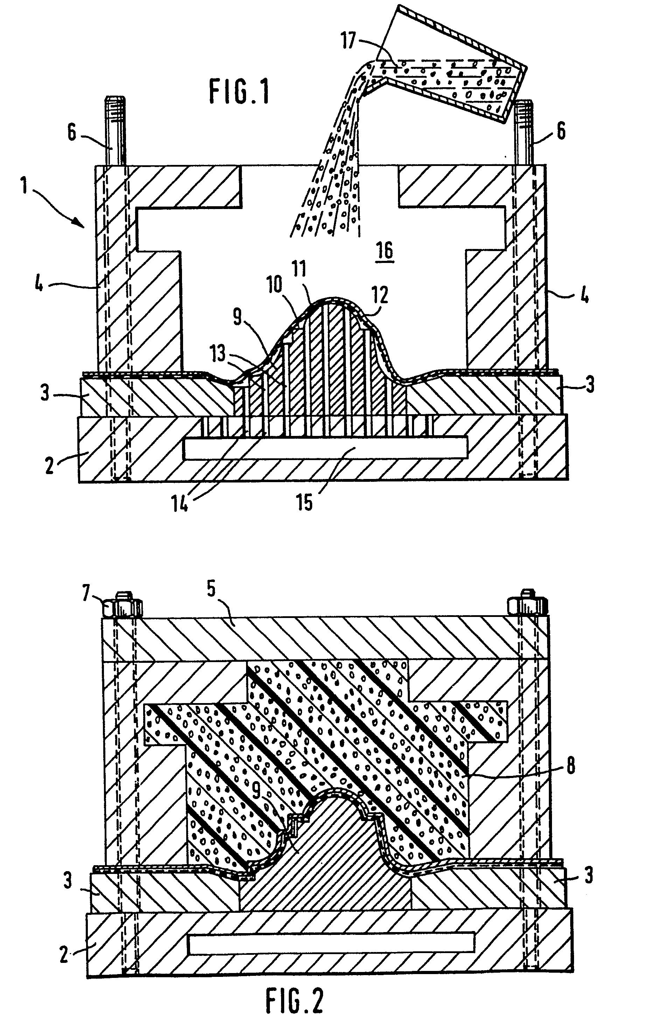

Das in Fig. 1 dargestellte Schäumwerkzeug 1 besteht
aus einer Bodenplatte 2, einer teilbaren Zwischenplatte 3
und den beiden Wandplatten 4. Zusammen mit der Deckplatte 5
(Fig. 2) wird es durch Ankerschrauben 6 mit Muttern 7
zusammengehalten.

Zur Erzeugung des Schleifschuhs 8 wird zunächst ein
Profilkörper 9 auf der Bodenplatte 2 zwischen den Zwischenplatten 3 befestigt. Sodann wird auf die Zwischenplatte 3
und die Profilfläche 10 des Profilkörpers 9 ein Schleifband 11
aufgelegt, das an seiner gegen die Profilfläche 10 gerichteten Seite mit dem Schleifmittel 12, also mit dem Schleifkorn
versehen ist. Das Schleifband 11 legt sich dabei nur angenähert an die Profilfläche 10 an.

Der Profilkörper 9 ist mit senkrechten Kanälen 13 versehen,
die mit Kanälen 14 in der Bodenplatte 2 verbunden sind und
auf der Profilfläche 10 ins Freie münden. Die Kanäle 14
sind mit einem Unterdruckkanal 15 verbunden, der die Bodenplatte 2 durchzieht und mit einem nicht dargestellten Unterdruckerzeuger verbunden ist.

Nach Aufsetzen der Wandplatten 4 entsteht ein Hohlraum 16,
der zur Aufnahme des Schaumstoffes 17 dient. Vor Einfüllen
von Schaumstoff 17 wird jedoch im Unterdruckkanal 15 ein
Unterdruck erzeugt, der über die Kanäle 14 und 13 das
Schleifband 11 an der Profilfläche 10 festhält.

Nach Einfüllen von Schaumstoff 17 in den Hohlraum 16 wird
das Schäumwerkzeug 1 durch die Deckplatte 5 fest und dicht
verschlossen, so daß der bei der chemischen Reaktion des
Ausschäumens entstehende Druck ausreicht, um das elastische
Schleifband 11 konturentreu auf die Profilfläche 10 zu
pressen. Die extrem hohe Querdehnung des Schleifbandes 11
quer zur Längserstreckung von Profilkörper 9 bewirkt dabei,
daß sich das Schleifband 11 konturentreu auch an die scharfen
Ecken und Kanten der Profilfläche 10 anlegt. Gleichzeitig
werden Schleifband 11 und Schaumstoff 17 unlösbar miteinander verbunden, so daß das Schleifband 11 das gewünschte
Profil annimmt und beibehält.

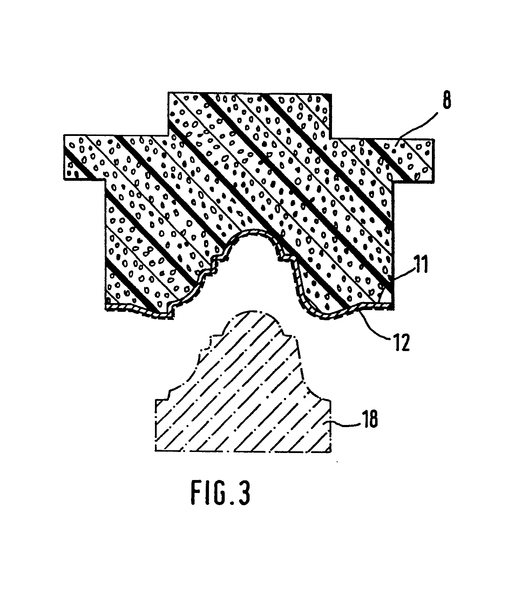

Nach Aushärten des Schaumstoffs kann der fertige
Schleifschuh 8 dem Schäumwerkzeug 1 entnommen werden
und ist nach dem Besäumen des überstehenden Schleifbandes 11 direkt verwendbar. Wie Fig. 3 zeigt, dient
er dann zum Schleifen z.B. einer Leiste 18.

3. 11. 81
0078963
Reg.Nr. 1.49

## Patentansprüche

1) Verfahren zur Herstellung eines Schleifschuhs mit einer mit dem Schleifmittel versehenen Profilfläche, g e k e n n z e i c h n e t  d u r c h  die Verfahrensschritte:

   a) Ein Profilkörper (9) wird auf der Bodenplatte (2) eines Schäumwerkzeugs (1) befestigt.

   b) Das Schleifmittel (12) wird auf der Profilfläche (10) des Profilkörpers (9) angebracht.

   c) Der Hohlraum (16) des geschlossenen Schäumwerkzeugs (1) wird mit Kunststoff (17) ausgeschäumt, der sich mit dem Schleifmittel (12) verbindet.

2) Verfahren nach Anspruch 1, d a d u r c h  g e k e n n - z e i c h n e t , daß das Schleifmittel (12) mit einem elastischen Schleifband (11) verbunden ist.

3) Verfahren nach Anspruch 2, d a d u r c h  g e k e n n - zeichnet, daß das Schleifband (11) eine solche Querdehnung quer zur Längserstreckung von Profilkörper (9) aufweist, daß es sich unter dem Druck von Schaumstoff (17) an die Profilfläche (10) vollständig anschmiegt.

4) Verfahren nach Anspruch 2 oder 3, d a d u r c h  g e k e n n z e i c h n e t , daß der Profilkörper (9) mit Kanälen (13) versehen ist, die seine Profilfläche (10) mit einem Unterdruckkanal (15) verbinden und daß das Schleifband (11) nach dem Einlegen durch Unterdruck am Profilkörper (9) gehalten wird.

FIG.1

FIG.2

FIG.3